# EUROPÄISCHE PATENTSCHRIFT

(11) **EP 3 686 634 B1**
(45) Veröffentlichungstag und Bekanntmachung des Hinweises auf die Patenterteilung: **01.03.2023**
(21) Anmeldenummer: 20153517.6
(22) Anmeldetag: 24.01.2020
(51) Int. Cl.: G02B 5/08, C03C 17/36, C03C 27/06

(54) **EINSEITIG SPIEGELNDES BAUELEMENT**
ONE-SIDED REFLECTING MODULE
COMPOSANT RÉFLÉCHISSANT SIMPLE FACE

(30) Priorität: 28.01.2019 DE 202019100479 U; 02.05.2019 DE 102019111302
(43) Veröffentlichungstag der Anmeldung: 29.07.2020
(73) Patentinhaber: INTERPANE Entwicklungs-und Beratungsgesellschaft mbH, 37697 Lauenförde (DE)
(72) Erfinder: Maier, Felix, 94447 Plattling (DE); Wild, Michael, 94469 Deggendorf (DE)
(74) Vertreter: Körfer, Thomas

(56) Entgegenhaltungen:
- DE-C1- 4 003 851
- DE-C1- 19 548 430
- US-A1- 2016 031 751

## Beschreibung

Die vorliegende Erfindung betrifft ein einseitig spiegelndes Bauelement.

Zur Verkleidung von Gebäuden werden heute Glaselemente mit spiegelnden Oberflächen eingesetzt. Glaselemente zur Verkleidung von Gebäuden können heute mit reflektierenden Schichtsystemen ausgerüstet werden. Diese Schichtsysteme sind so ausgelegt, dass sie an ihrer äußeren Oberfläche eine hohe Reflexionsfähigkeit aufweisen. Ein Teil des einfallenden Lichtes transmittiert durch den Schichtaufbau. Die dem Gebäude zugewandte Seite des Glaselements reflektiert das von innen auftreffende Licht mit einem deutlich geringeren Reflexionsgrad.

Die Patentanmeldung US 2018/0180776A1 beschreibt jeweils teildurchlässige Spiegel mit einer Resttransmission im sichtbaren Bereich des Spektrums zwischen 5% und 45%, die auf der nicht-beschichteten Seite eine geringere Reflexion aufweisen als auf der beschichteten Seite. Dabei kommt es jedoch vor allem darauf an, eine möglichst hohe Transmission bei gleichzeitig guter Spiegelwirkung/Reflexion zu erhalten.

DE 195 48 430 C1 offenbart ein Bauelement aufweisend ein Flachglas und ein Schichtsystem mit einer ersten Silberschicht, einer Metalloxidschicht und einer zweiten Silberschicht. Die Transmission liegt im sichtbaren Bereich des Spektrums bei über 60%.

DE 40 03 851 C1 offenbart eine Fassadenplatte aufweisend eine Floatglasscheibe und ein Schichtsystem mit einer ersten Chrom-Schicht, einer SnO2 Oxidschicht und einer zweiten Chrom-Schicht. Die Lichtdurchlässigkeit ist kleiner als 1% und die Lichtreflexion bei Betrachtung von der Glasseite ist 14,3%.

US2016031751 A1 offenbart ein Glassubstrat und ein Schichtsystem mit einer ersten Metallschicht aus CrZr, einer Oxidschicht aus TZO und einer Nitridschicht aus SiN. Die Transmission ist 10.8%, die Reflexion auf der nicht-beschichteten Seite ist 51.2% und die Reflexion auf der beschichteten Seite ist 15.7%.

Der Erfindung liegt die Aufgabe zugrunde, ein Bauelement zu schaffen, das von beiden Seiten betrachtet werden kann und von der einen Seite als Spiegel mit hoher Reflexion wirkt und von der gegenüberliegenden Seite entspiegelt ist.

Die Aufgabe wird erfindungsgemäß durch ein zumindest teilweise verspiegeltes Bauelement mit den Merkmalen des Anspruchs 1 gelöst. In den Unteransprüchen sind vorteilhafte Weiterbildungen des erfindungsgemäßen zumindest teilweise verspiegelten Bauelements dargestellt.

Vorteilhafterweise werden von der dem Substrat zugewandten Seite eintreffende Lichtstrahlen an der ersten Metallschicht reflektiert. Diese Lichtstrahlen können von dieser ersten Metallschicht jedoch nicht vollständig reflektiert werden. Die residuale Lichtmenge wird durch die zweite Metallschicht in Kombination mit der mindestens einen Oxidschicht absorbiert. Außerdem ist die Kombination der zweiten Metallschicht mit der mindestens einen Oxidschicht dazu geeignet, Licht das von der dem Substrat abgewandten Seite auf das teilweise verspiegelte Bauelement trifft, zu absorbieren.

In einer vorteilhaften bevorzugten Ausgestaltung besteht die erste Metallschicht im Wesentlichen aus Chrom (Cr). Diese Cr- Schicht zeichnet sich durch einen hohen Reflexionsgrad aus. Vorteilhafterweise ist diese Cr-Schicht extrem witterungsbeständig. Die zweite Metallschicht besteht vorzugsweise im Wesentlichen aus einer Nickelchrom- Legierung (NiCr). Eine Schicht aus diesem Material in Kombination mit der Oxidschicht weist einen hohen Absorptionsgrad bei höchster Witterungsbeständigkeit auf.

In einer vorteilhaften bevorzugten Ausgestaltung weist die erste Metallschicht einen Reflexionsgrad grösser 50%, bevorzugt grösser 70% und besonders bevorzugt grösser 80% auf.

In weiteren Ausführungsformen besteht die erste Metallschicht alternativ zu Cr aus anderen Metallen oder Metalllegierungen. Zu den in Frage kommenden Metallen gehören Ag und Al. Als eine bevorzugte Metalllegierung kommt NiCrW zum Einsatz. Der Wolframanteil (W) dieser Metalllegierung ist mindestens 30 Gew.%, bevorzugt mindestens 35 Gew.% und besonders bevorzugt mindestens 37 Gew.%, wobei der Nickelanteil mindestens 9 Gew.%, bevorzugt mindestens 20 Gew.% und besonders bevorzugt 25 Gew.% ist. Dabei ist das Gewichtsverhältnis von Ni bezogen auf Cr bevorzugt im Bereich von 90 Gew.% / 10 Gew.% bis 50 Gew.% / 50 Gew.% und besonders bevorzugt im Bereich 80 Gew.% / 20 Gew.%. Das Gewichtsverhältnis des NiCr Anteils bezogen auf den Wolframanteil in der Legierung NiCrW beträgt 10 Gew.% NiCr / 90 Gew.% W bis 65 Gew.% NiCr / 35 Gew.% Wolfram, bevorzugt 30 Gew% NiCr / 70 Gew.% W bis 63 Gew.% NiCr / 37 Gew.% W. Zusätzlich kann diese Metalllegierung auch Vanadium (V) beinhalten. Der Vanadiumsanteil ist vorzugsweise in geringeren Mengen als Ni, Cr und W einlegiert. Mit den Konzentrationen der einzelnen Komponenten lassen sich in besonders vorteilhafter Weise die Reflexionseigenschaften dieser Metalllegierung einstellen. Die zweite Metallschicht kann alternativ im Wesentlichen aus Metallnitriden CrN_{Y} oder den Metalllegierungen NiCr mit einem Ni- Anteil von 60 Gew.% bis 90Gew.% appliziert sein. Hier können durch das Variieren der Legierungsbestandteile die Absorptionseigenschaften und/oder die Reflexionseigenschaften eingestellt werden.

In einer bevorzugten Ausführungsform weist die erste Metallschicht eine Dicke zwischen 3 nm und 60 nm auf. Die erste Metallschicht wird in einer bevorzugten Ausführungsform mit einer Dicke zwischen 40 nm und 50 nm und in einer besonders bevorzugten Ausführungsform zwischen 44 nm und 46 nm ausgeführt. Dabei kann mit Hilfe der Schichtdicke in besonders vorteilhafter Weise das Reflexionsverhalten der ersten Metallschicht gesteuert werden. Insbesondere das reflektierte Lichtspektrum kann so den Erfordernissen angepasst werden.

Die zweite Metallschicht kann vorzugsweise eine Dicke zwischen 10 nm und 20 nm aufweisen, bevorzugt zwischen 13 nm und 15 nm. Mit diesen Schichtdicken wird sowohl das Reflexionsverhalten als auch das Absorptionsverhalten dieser zweiten Metallschicht gesteuert.

In einer weiteren Ausführungsform besteht die mindestens eine erste Oxidschicht aus Siliziumoxid (SiOx) und/oder aus einem Mischoxid von Zink und Zinn (ZnSnOₓ) ohne Beschränkung der Stöchiometrie. Das Mischoxid von Zink und Zinn hat ein Gewichtsverhältnis vom Zink zum Zinn von 90 Gew.% / 10 Gew.% bis 10 Gew.% / 90 Gew.%, vorzugsweise 52 Gew.% / 48 Gew. %. Letzteres entspricht Zinkstannat Zn₂SnO₄, in der Folge als ZSO5 abgekürzt. Zur Vereinfachung ist im Folgenden ZnSnOₓ immer ohne Beschränkung der Stöchiometrie zu verstehen. Die Oxidschicht dieser Ausführungsform ist besonders geeignet, um eine Spiegelung der zweiten Metallschicht in Richtung der ersten Metallschicht zu mindern.

Die erste Oxidschicht weist in einer besonders bevorzugten Ausführungsform eine erste Teilschicht aus SiOx mit einer Dicke zwischen 20 nm und 30 nm auf, bevorzugt zwischen 24 nm und 26 nm. Außerdem weist die erste Oxidschicht eine zweite Teilschicht aus ZnSnOₓ mit einer Dicke zwischen 25 nm und 40 nm auf. Bevorzugt ist die zweite Teilschicht mit einer Dicke zwischen 32 nm und 34 nm ausgeführt.

In einer weiteren bevorzugten Ausführungsform ist auf die zweite Metallschicht mindestens eine zweite Oxidschicht aufgebracht. Mit dieser zweiten Oxidschicht wird erreicht, dass eine Reflexion durch einen Lichteinfall auf der dem Substrat abgewandten Seite zusätzlich verhindert wird. Dadurch, dass die oben beschriebenen Schichten ein Farbspektrum nicht gleichmäßig absorbieren können, ist diese zweite Oxidschicht besonders vorteilhaft. Die zweite Oxidschicht ist bevorzugt so ausgelegt, dass in Kombination mit der zweiten Metallschicht das Licht in seinem gesamten sichtbaren Spektrum gleichmäßig absorbiert wird. Somit lässt sich auf dieser dem Substrat abgewandten Seite eine Reflexion auf ein gewünschtes Maß ohne farbige Restreflexionen verringern.

Vorteilhafterweise besteht in einer bevorzugten Ausführungsform die mindestens zweite Oxidschicht im Wesentlichen aus SiOₓ und/oder im Wesentlichen aus ZnSnOₓ, insbesondere ZSO5. Mit Hilfe dieser Materialien lässt sich eine Reflexion in einem breiten Spektrum des sichtbaren Lichts verringern oder nahezu verhindern.

Die zweite Oxidschicht enthält eine erste Teilschicht die im Wesentlichen aus ZnSnOₓ mit einer Dicke zwischen 45 nm und 65 nm besteht. Bevorzugt ist die erste Teilschicht der zweiten Oxidschicht im Wesentlichen bestehend aus ZnSnOₓ mit einer Dicke zwischen 49 nm und 59 nm und besonders bevorzugt zwischen 53 nm und 55 nm ausgeführt. Eine zweite Teilschicht der zweiten Oxidschicht besteht im Wesentlichen aus SiOₓ mit einer Dicke zwischen 18 nm und 30 nm. Bevorzugt beträgt die Dicke der zweiten Teilschicht der zweiten Oxidschicht zwischen 22 nm und 24 nm. Die beschriebene zweite Oxidschicht ist besonders geeignet, Reflexionen zu unterdrücken. Durch eine Anpassung der Schichtdicken kann in besonders vorteilhafter Weise die spektrale Eigenschaft dieser zweiten Oxidschicht beeinflusst werden.

Die Oxidschicht bestehend aus ZnSnOₓ weist in einer Ausführungsform einen Brechungsindex von 1,75 bis 2,10, bevorzugt von 1,80 bis 2,05 und besonders bevorzugt von 1,85 bis 2,00 auf. Die Oxidschicht bestehend aus SiOx weist einen Brechungsindex von 1,44 bis 1,55, bevorzugt von 1,44 bis 1,48 und besonders bevorzugt von 1,45 auf. Die Brechungsindizes sind in besonders vorteilhafter Weise so ausgelegt, dass eine maximale Entspiegelung im Bereich des sichtbaren Lichts eingestellt ist. Mit dieser Entspiegelung lässt sich die Wirksamkeit der absorbierenden zweiten Metallschicht deutlich erhöhen.

In einer weiteren Ausführungsform besteht die im Wesentlichen aus ZnSnOₓ bestehende Oxidschicht aus einem alternativen Material wie ZnO, ZnO:Al mit einem Gewichtsanteil des Al von 1 Gew.% 10Gew.%, bevorzugt mit einem Gewichtsanteil des Al von 2 Gew.% - Gew.10%, SiN_{y} oder Ti(Zr)Oₓ mit einem Zr Anteil von 1 Gew.% - 99 Gew.%. Die Oxidschicht bestehend im Wesentlichen aus SiOₓ kann alternativ aus SiOₓ:Al mit einem Gewichtsanteil des Al von 0,02 Gew.% - 10 Gew.% bestehen. Mit dieser alternativen Materialauslegung der Oxidschichten lassen sich die Parameter bezüglich des Absorptionsverhaltens in Kombination mit der zweiten Metallschicht und der Antireflexionseigenschaften der Oxidschichten so steuern, dass die nicht reflektierende Seite des teilweise verspiegelten Bauelements farbneutral ist.

In einer bevorzugten Ausführungsform hat die Oxidschicht in einer der Alternativen zu ZnSnOₓ einen Brechungsindex von 1,75 bis 2,10, bevorzugt von 1,80 bis 2,05 und besonders bevorzugt von 1,85 bis 2,00. Die Oxidschicht bestehend aus einer der Alternativen zu SiOₓ hat einen Brechungsindex von 1,44 bis 1,55, bevorzugt von 1,44 bis 1,48 und besonders bevorzugt von 1,45. Somit sind die Brechungsindizes besonders vorteilhaft für eine maximale Entspiegelung im Bereich des sichtbaren Lichts einstellbar, um die Wirksamkeit der absorbierenden zweiten Metallschicht deutlich zu verbessern.

In einer weiteren bevorzugten Ausführungsform ist zwischen dem transparenten Substrat und der ersten Metallschicht ein Haftvermittler eingebracht. Dieser Haftvermittler besteht vorzugsweise im Wesentlichen aus SiOₓ. Diese Schicht stellt eine hochfeste Verbindung des Schichtsystems mit dem Substrat sicher.

In einer weiteren bevorzugten Ausführungsform ist die äußerste Schicht des Schichtsystems eine gehärtete Deckschicht. Die Deckschicht besteht vorzugsweise im Wesentlichen aus Titan- Zirkonium- Oxid (TZO), bevorzugt mit einem Gewichtsverhältnis von TiO₂ zu ZrO₂ von 25 Gew.% / 75 Gew.% bis 65 Gew.% / 35 Gew.%. Mit dieser harten Deckschicht lässt sich besonders vorteilhaft eine äußerst widerstandsfähige Oberfläche schaffen, die besonders robust gegen chemische und mechanische Einflüsse ist.

In einer weiteren Ausführungsform ist die Deckschicht alternativ im Wesentlichen aus Ti(Zr)Ox mit einem Zr Anteil von 1 Gew.% bis 99 Gew.% hergestellt.

Die Schichtdicke der Deckschicht weist eine Dicke zwischen 1 nm und 5 nm auf. Bevorzugt wird eine Dicke der Deckschicht zwischen 2 nm und 3 nm eingestellt.

Die Deckschicht weist einen besonders vorteilhaften Brechungsindex von 2,00 bis 2,55, bevorzugt von 2,10 bis 2,45 und besonders bevorzugt von 2,20 bis 2,40 auf. Dieser Brechungsindex unterstützt in besonders vorteilhafter Weise die Antireflexionseigenschaften der zweiten Oxidschicht.

In einer bevorzugten Ausführungsform besteht das transparente Substrat aus Glas insbesondere aus Flachglas mit hoher Lichttransmission oder aus einem transparenten Kunststoff. Als transparente Kunststoffe kommen insbesondere Polycarbonat (PC) oder Polymethylmethacrylat (PMMA) in Frage. Vorteilhafterweise verfügt Flachglas mit hoher Lichttransmission neben hervorragenden optischen Eigenschaften über eine äußerst gute chemische Beständigkeit. Außerdem ist Flachglas sehr temperaturbeständig. Polycarbonat ist Vorteilhafterweise besonders bruchstabil bei geringem Gewicht. Polymethylmethacrylat weist vorteilhafterweise eine hohe Bruchfestigkeit bei einem geringen Gewicht und einer guten Kratzfestigkeit auf.

Das erfindungsgemäße Verbundglasbauelement bestehend aus dem oben bereits beschriebenen teilweise verspiegelten Bauelement, einem auf das Schichtsystem dieses Bauelements aufgebrachten Verbundmaterial und einem mindestens zweiten transparenten Substrat. Durch die Verbundglas-Konstruktion wird in einer besonders vorteilhaften Weise eine äußerst hohe mechanische Festigkeit erreicht. Außerdem wird durch das Einbetten des Schichtsystems zwischen die beiden Substraten in besonders vorteilhafter Weise das Schichtsystem vor chemischen und mechanischen Beschädigungen geschützt.

In einer bevorzugten Ausführungsform besteht auch das zweite transparente Substrat aus Glas, insbesondere aus Flachglas mit hoher Lichttransmission, oder einem transparenten Kunststoff insbesondere aus Polycarbonat oder insbesondere aus Polymethylmethacrylat. Das Flachglas mit hoher Lichttransmission ist in besonders vorteilhafter weise beständig gegen aggressive chemische Substanzen wie Säuren und Laugen. Außerdem ist Flachglas äußerst temperaturbeständig. Polycarbonat ist Vorteilhafterweise besonders bruchstabil bei geringem Gewicht. Polymethylacrylat weist vorteilhafterweise eine hohe Bruchfestigkeit bei einem geringen Gewicht und einer guten Kratzfestigkeit auf. Besonders Vorteilhafte Eigenschaften für das Verbundglasbauelement lassen sich durch Kombinationen der Werkstoffe für das erste Substrat und das zweite Substrat erreichen.

In einer bevorzugten Ausführungsform ist das Verbundmaterial eine Kunststoffschicht zwischen dem teilweise verspiegeltem Bauelement und dem zweiten transparenten Substrat. Diese Kunststoffschicht besteht insbesondere aus Polyvinylbutyral, Ethylenvinylacetat oder Polyurethan. Diese Verbundmaterialien stellen einerseits eine hochfeste Verbindung zwischen den Substraten her und verhindern andererseits ein unkontrolliertes Umherfliegen von Splittern bei Beschädigungen.

Nachfolgend werden Ausführungsbeispiele der Erfindung anhand der Zeichnungen beispielhaft beschrieben. Die Zeichnungen zeigen:
- Fig. 1: ein Schichtaufbau eines Ausführungsbeispiels eines erfindungsgemäßen zumindest teilweise verspiegelten Bauelements;
- Fig. 2: ein Ausführungsbeispiel eines erfindungsgemäßen Verbundglasbauelements;
- Fig. 3: ein Farbraumdiagramm;
- Fig. 4a: verschiedene Ausführungen des erfindungsgemäßen zumindest teilweise verspiegelten Bauelements mit Sicht auf die unbeschichtete Seite des Substrats;
- Fig. 4b: verschiedene Ausführungen des erfindungsgemäßen zumindest teilweise verspiegelten Bauelements mit Sicht auf die beschichtete Seite des Substrats;

- Fig. 5: ein Flussdiagramm eines Ausführungsbeispiels eines Verfahrens, das nicht unter den Anspruchsgegenstand fällt;

- Fig. 6a: ein Schichtaufbau eines Ausführungsbeispiels eines erfindungsgemäßen zumindest teilweise verspiegelten Bauelements mit einer Maskierungsschicht und
- Fig. 6b: ein Schichtaufbau eines Ausführungsbeispiels eines erfindungsgemäßen zumindest teilweise verspiegelten Bauelements nach Entfernen der Maskierungsschicht und des unerwünschten Schichtaufbaus.

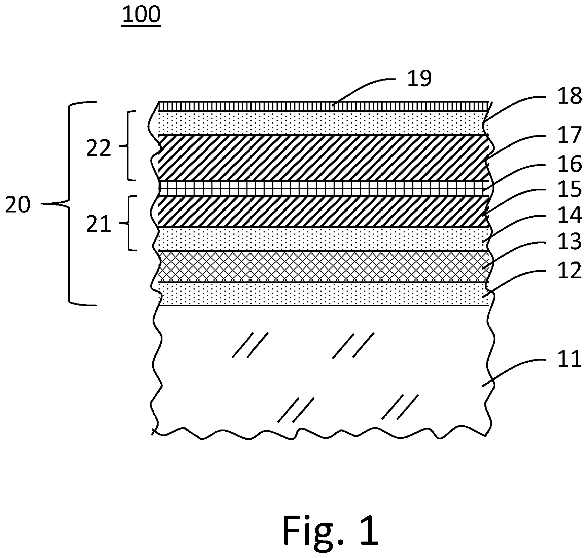

Fig. 1 zeigt ein erstes Ausführungsbeispiel eines teilweise verspiegelten Bauelements 100. Das teilweise verspiegelte Bauelement 100 umfasst ein transparentes Substrat 11, das z. B. aus einem hochtransparenten Flachglas oder einem transparenten Kunststoff besteht. Auf dem Substrat 11 ist im Ausführungsbeispiel ein Haftvermittler 12 aufgebracht. Das hochtransparente Flachglas besteht im Ausführungsbeispiel aus einem Kalk-Natron-Silikat-Glas. Das Substrat 11 aus transparentem Kunststoff kann insbesondere aus Polymethylmethacrylat oder insbesondere aus Polycarbonat bestehen.

Der Haftvermittler 12 besteht im Ausführungsbeispiel im Wesentlichen aus SiOₓ. Mit dem Haftvermittler wird sichergestellt, dass die folgende Schichte zuverlässig und stabil auf dem Substrat 11 haftet. Alternativ kann als Material zur Haftvermittlung auch ein z.B. mit Aluminium dotiertes SiOₓ, ein SiOₓ:Al zum Einsatz kommen. Das SiOₓ:Al ist dann z.B. mit 0,02 Gew.% bis ca. 10 Gew.% dotiert, um es besser von einem Target, das dann leitfähig ist, sputtern zu können. Der Haftvermittler 12 wird in Schichtdicken von 15 bis 50 nm und vorzugsweise in Schichtdicken von 25 nm bis 35 nm aufgetragen. Der Haftvermittler 12 weist in diesem Ausführungsbeispiel einen Brechungsindex von 1,44 bis 1,55, bevorzugt von 1,44 bis 1,48 und besonders bevorzugt von 1,45 auf. Der Brechungsindex ist vorteilhafter Weise so eingestellt, dass die Reflexionseigenschaften der ersten Metallschicht 13 nicht beeinträchtigt werden.

Dem Haftvermittler 12 folgt eine Spiegelschicht bestehend aus einer ersten Metallschicht 13. Hierzu wird im Wesentlichen vorzugsweise eine Cr Schicht vorzugsweise durch Magnetronsputtern aufgebracht. Allerdings sind auch alternative Metalle wie Ag, Al, NiCrW oder NiCr mit Ni 40 Gew.% - 80 Gew.% einsetzbar. Die Aufgabe dieser Schicht liegt in der nahezu vollständigen Reflexion des von der Substratseite einfallenden Lichts. Dazu ist der Reflexionsgrad der ersten Metallschicht 13 grösser 50%, bevorzugt grösser 70% und besonders bevorzugt grösser 80% eingestellt. Diese Einstellung des Reflexionsgrads erfolgt durch Auswahl der Schichtdicke und Zusammensetzung der ersten Metallschicht 13. Der Reflexionsgrad ist für einen Wellenlängenbereich des Lichts von 400nm bis 700nm besonders wirksam. Dementsprechend soll die Transmission des von der Substratseite hereinfallenden Lichts weitgehend verhindert werden.

Auf die erste Metallschicht 13 wird eine erste Oxidschicht 21 appliziert. Diese erste Oxidschicht 21 besteht im Ausführungsbeispiel aus einer ersten Teilschicht 14, die auf der ersten Metallschicht 13 aufgebracht wird, und einer zweiten Teilschicht 15. Die erste Teilschicht 14 besteht im Ausführungsbeispiel im Wesentlichen aus SiOx mit einer Dicke zwischen 20 nm und 30 nm und bevorzugt einer Dicke zwischen 24 nm und 26 nm. Als alternatives Material kann z.B. SiOₓ:Al mit Al 0,02 Gew.% bis 10 Gew.% für die erste Teilschicht 14 eingesetzt werden. Die erste Teilschicht 14 der ersten Oxidschicht 21 weist einen Brechungsindex von 1,44 bis 1,55, bevorzugt von 1,44 bis 1,48 und besonders bevorzugt von 1,45 auf. Die zweite Teilschicht 15 besteht im Ausführungsbeispiel im Wesentlichen aus ZnSnOₓ mit einer Dicke zwischen 25 nm und 40 nm und bevorzugt zwischen 32 nm und 34 nm. Sie wird auf einen Brechungsindex im Bereich von 1,75 bis 2,10, bevorzugt von 1,80 bis 2,05 und besonders bevorzugt von 1,85 bis 2,00 eingestellt. Alternativ zu ZnSnOₓ ist z.B. auch ZnO, Al:ZnO mit Al 1 Gew% bis 5 Gew.%, SiN oder Ti(Zr)Ox mit Zr 1 Gew.% bis99 Gew.% geeignet. Mit der ersten Oxidschicht 21 wird die erste Metallschicht 13 entspiegelt, so dass Licht, das von der dem Substrat 11 abgewandten Seite einfällt, nicht reflektiert wird.

Es folgt eine zweite Metallschicht 15. Diese zweite Metallschicht 16 besteht im Ausführungsbeispiel im Wesentlichen aus NiCr, z.B. NiCr mit Ni 60 Gew.% bis 90 Gew.%), kann aber auch aus CrN bestehen. Hier wird eine Schicht mit einer Dicke zwischen 10 nm und 20 nm und bevorzugt zwischen 13 nm und 15 nm mit einem Magnetronsputterverfahren auf die erste Oxidschicht 21 aufgetragen. Mit der zweiten Metallschicht 16 werden Lichtwellen, die auf die dem Substrat 11 abgewandte Seite auftreffen, absorbiert.

Die zweite Metallschicht 16 wird mit einer zweiten Oxidschicht 22 beschichtet. Die zweite Oxidschicht 22 besteht im Ausführungsbeispiel wiederum aus einer auf die zweite Metallschicht 16 aufgebrachten ersten Teilschicht 17 und einer zweiten Teilschicht 18. Die erste Teilschicht 17 besteht im Ausführungsbeispiel im Wesentlichen aus ZnSnOₓ mit einer Dicke zwischen 45 nm und 65 nm und bevorzugt zwischen 49 nm und 59 nm. Als Alternativen zu ZnSnOₓ eignen sich auch ZnO, ZnO:Al mit Al 1 Gew.% bis 5 Gew.%, SiN_{y} oder Ti(Zr)Ox mit Zr 1 Gew.% bis 99%. Der Brechungsindex dieser ersten Teilschicht 17 ist in einen Bereich von 1,75 bis 2,10, bevorzugt von 1,80 bis 2,05 und besonders bevorzugt von 1,85 bis 2,00 eingestellt. Die zweite Teilschicht 18 besteht im Ausführungsbeispiel im Wesentlichen aus SiOx mit einer Dicke zwischen 18 nm und 30 nm und bevorzugt einer Dicke zwischen 22 nm und 24 nm. Es kann z.B. auch SiOx:Al mit Al 0,02 Gew.% bis 10 Gew.% als Alternative für die zweite Teilschicht 18 eingesetzt werden. Die zweite Teilschicht 18 hat einen Brechungsindex in einem Bereich von 1,44 bis 1,55, bevorzugt von 1,44 bis 1,48 und besonders bevorzugt von 1,45. Mit der zweiten Oxidschicht 22 wird die zweite Metallschicht 16 zusätzlich zu deren Absorptionswirkung so entspiegelt, so dass Licht, das von der dem Substrat 11 abgewandten Seite einfällt, nicht reflektiert wird.

Zum Schutz des Schichtsystems 20 ist im Ausführungsbeispiel an deren Oberfläche eine harte Deckschicht 19 mit einem Brechungsindex von 1,75 bis 2,10, bevorzugt von 1,80 bis 2,05 und besonders bevorzugt von 1,85 bis 2,00 vorgesehen. Diese Deckschicht bestehet im Wesentlichen aus TZO. Alternativ kann diese Deckschicht auch im Wesentlichen aus Ti(Zr)Ox mit Zr 1-99 Gew.% bestehen. Die Deckschicht 19 kann eine Dicke zwischen 1 nm und 5 nm aufweisen, bevorzugt zwischen 2 nm und 3 nm. Mit der Deckschicht wird eine dauerhafte chemische und mechanische Stabilität des Schichtsystems sichergestellt. Dabei werden die optischen Eigenschaften des Schichtsystems 20 nicht beeinflusst.

Das zumindest teilweise verspiegelte Bauelement 100 hat von der nicht-beschichteten Seite aus betrachtet einen mittleren Reflexionsgrad im sichtbaren Bereich des Spektrums von mindestens 50%. Von der beschichteten Seite betrachtet hat das teilweise verspiegelte Bauelement 100 höchstens einen Reflexionsgrad von 8%. Die mittlere Transmission im sichtbaren Bereich des Spektrums liegt bei weniger als 2% und besonders bevorzugt bei weniger als 0,2%.

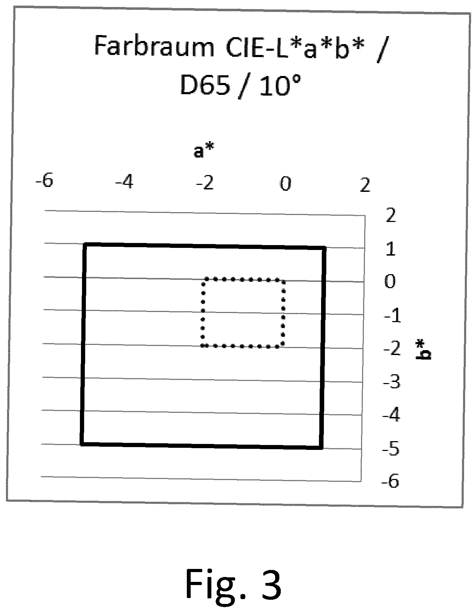

Die spektrale Reflexion soll auf beiden Seiten des teilweise verspiegelten Bauelements 100 farblich neutral sein. Der Farbwiedergabeindex des teilweise verspiegelten Bauelements liegt nach der Norm EN 410 bei mindestens 90 und vorzugsweise über 95. Wie in Fig. 3 dargestellt, sollen Farbwerte der Reflexion nach der Norm EN ISO 11664-CIE 1976 L*a*b*/D65/10° im Bereich -5 < a* < 1 und - 5 < b*< 1 liegen, bevorzugt jedoch im Bereich -2 < a* < 0 und -2 < b*< 0 liegen. Gleichzeitig soll die Resttransmission möglichst gering sein.

Die oben beschriebene mehrlagige Beschichtung 20 aus einer Kombination von metallischen und dielektrischen Einzelschichten ist vorzugsweise im Vakuum durch Magnetronsputtern aufgebracht. Dabei werden Materialien und Schichtdicken so ausgewählt, dass nach dem Prinzip der Interferenz von elektromagnetischer Strahlung (Licht) eine hoch- und eine niedrigreflektierende Seite entstehen. Zudem wird die nicht reflektierte Strahlung zu einem hohen Grad in der Beschichtung absorbiert, so dass die Resttransmission reduziert wird.

Durch die Auswahl der Materialien ist das Schichtsystem 20 so ausgeführt, dass sie gegen physikalische und chemische Belastungen wie erhöhte Temperatur, ultraviolette Strahlung und korrosiven Angriff stabil ist. Eine entsprechende Prüfung dieser Eigenschaften ist in DIN EN 1096-2 beschrieben, wobei das Schichtsystem 20 die Anforderungen der dort beschriebenen Beständigkeitsklasse B erfüllt.

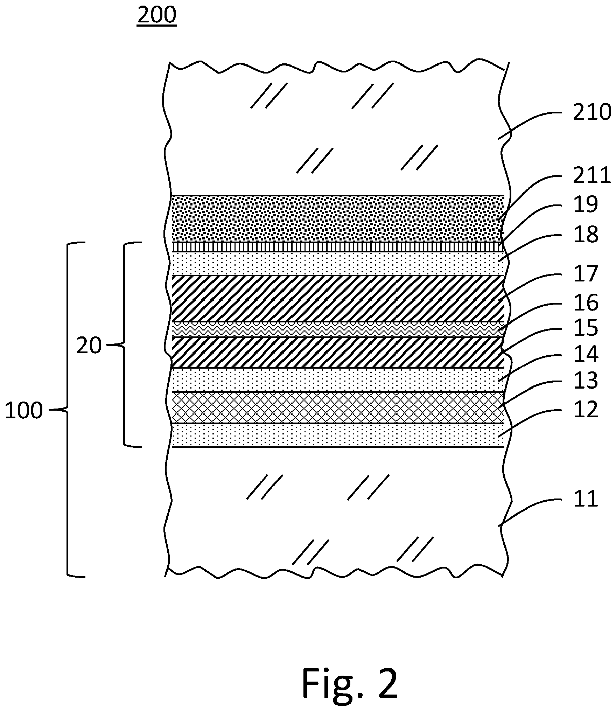

Fig. 2 zeigt ein Ausführungsbeispiel eines entsprechenden Verbundglasbauelements 200. Das Verbundglasbauelement 200 besteht aus einem teilweise verspiegelten Bauelement 100 entsprechend der oben beschriebenen Ausführungsform und einem zweiten transparenten Substrat 210, die durch ein Verbundmaterial 211 fest mit einander verbunden sind.

Das zweite transparente Substrat 210 besteht aus einem hochtransparenten Flachglas, welches im Ausführungsbeispiel aus einem Kalk-Natron-Silikat-Glas gefertigt ist. Außerdem ist für das zweite Substrat 210 ein transparenter Kunststoff geeignet, der insbesondere aus Polymethylmethacrylat oder insbesondere aus Polycarbonat besteht.

Um dem Verbundglasbauelement 200 bestimmte mechanische Eigenschaften zu verleihen, können die verschiedenen Substratmaterialien besonders vorteilhaft kombiniert werden.

Als Verbundmaterial 211 wird im Ausführungsbeispiel ein Polymer eingesetzt. Dieses Polymer besteht insbesondere aus Polyvinylbutyral, Ethylenvinylacetat oder Polyurethan. Dabei soll es möglich sein, die Beschichtung innerhalb eines mehrlagigen Verbundes zu laminieren und dabei die oben beschriebenen optischen Anforderungen zu erfüllen. Das Verbundglasbauelement 200 kann z.B. ein Verbundglas oder ein Verbundsicherheitsglas nach EN 12543 sein.

Durch die geeignete Auswahl der Materialien ist es möglich, das Schichtsystem 20 so auszuführen, dass innerhalb eines Laminates die mechanische Haftung zwischen dem Substrat 11, dem Schichtsystem 20 und dem Verbundmaterial 211, sowie innerhalb des Schichtsystems 20 einen dauerhaften und mechanisch und chemisch stabilen mehrlagigen Verbund ermöglicht. Das so gebildete Verbundglasbauelement 200 erfüllt Anforderungen eines Verbundsicherheitsglases nach EN 12543.

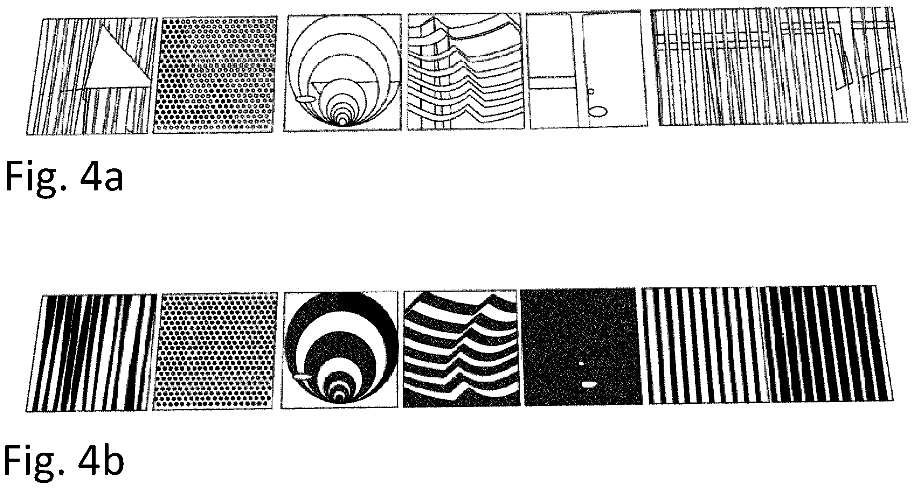

Fig. 4a zeigt verschiedene Ausführungen des zumindest teilweise verspiegelten Bauelements mit Sicht auf die unbeschichtete Seite des Substrats und Fig. 4b mit Sicht auf die beschichtete Seite des Substrats 11. Es ist deutlich zu erkennen, dass das zumindest teilweise verspiegelte Bauelement 100 teilflächig z.B. mit Ornamenten oder Schriftzügen, beschichtete Elemente herstellbar ist.

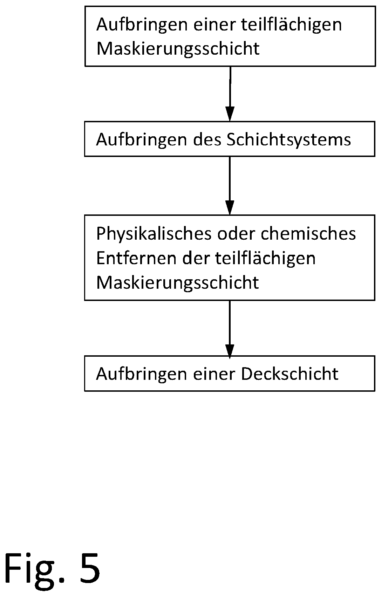

Die Herstellung der Beschichtung mit dem MagnetronsputterVerfahren nach dem lift-off Verfahren macht auch eine teilflächige Beschichtung des Substrats 11 möglich. Dies ist in Fig. 5 veranschaulicht. Hierbei wird in der Regel eine aus einem Polymerlack oder einer Folie bestehende, teilflächige Maskierungsschicht 310 auf die zu beschichtende Oberfläche des Substrats 11 aufgebracht.

Besteht die Maskierungsschicht 310 aus einer Folie, so sind die Bereiche auf dem Substrat 11, die kein Schichtsystem 20 erhalten sollen, durch die Folie abgedeckt. Dabei werden die Konturen der Ornamente mit Hilfe eines Schneidplotters in die Folie geschnitten. Anschließend werden die Bereiche, in denen das Schichtsystem 20 auf das Substrat 11 aufgebracht werden soll, freigelegt. Nun wird die verbleibende Folie mit Hilfe eines Transferträgers auf das Substrat 11 übertragen.

Für eine Maskierungsschicht 310 aus einem Polymerlack kommt bevorzugt ein fotolithographischer Prozess zum Einsatz. Hierzu wird ein mit Licht aushärtender Polymerlack auf das Substrat 11 aufgetragen. Dabei kommt sowohl ein Positivlack als auch ein Negativlack in Frage. Bei einem Negativlack werden die Bereiche ausgehärtet, die mit UV- Licht bestrahlt werden. Daher muss die Vorlage in dem Bereich, in dem kein Schichtsystem 20 auf dem Substrat 11 aufgebracht werden soll, transparent sein. Im Falle eines Positivlacks wird nach dem Beschichten der Bereich des Substrats 11 belichtet, an dem das Schichtsystem 20 auf das Substrat aufgebracht werden soll. Daher muss die Fotovorlage in den Bereichen, wo das Schichtsystem 20 aufgebracht werden soll, transparent sein. Zum Belichten kommt in beiden Lacksystemen bevorzugt ultraviolettes Licht zum Einsatz. Nach dem Belichten erfolgt das Entwickeln der Maskierungsschicht 200, wodurch die Struktur der Ornamente oder Schriftzüge freigelegt wird. Die Schichtdicke der Maskierungsschicht 310 ist so gewählt, dass sie dicker als das Schichtsystem 20 ist.

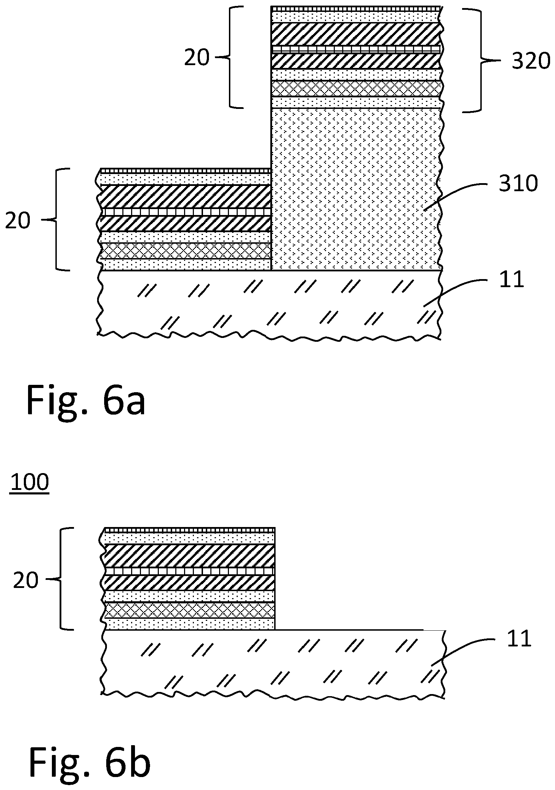

Das Substrat 11 mit der Maskierungsschicht 310 wird vollflächig mit dem Schichtsystem 20 beschichtet. Der so entstandene Schichtaufbau auf dem Substrat ist in Fig. 6a dargestellt. Anschließend wird die Maskierungsschicht 310 physikalisch oder chemisch entfernt. Mit dem Entfernen der Maskierungsschicht 310 wird auch der unerwünschte Teil des Schichtsystems 320 entfernt. Das Schichtsystem 20 mit den gewünschten Ornamenten und Schriftzügen bleibt fest mit dem Substrat 11 verbunden und bildet so ein teilweise verspiegeltes Bauelement 100.

Das so entstandene teilweise verspiegelte Bauelement 100 ist uneingeschränkt in dem Verbundglasbauelement 200 einsetzbar.

## Patentansprüche

1. Ein zumindest teilweise verspiegeltes Bauelement (100),
wobei das zumindest teilweise verspiegelte Bauelement (100) ein transparentes Substrat (11) und ein darauf aufgebrachtes Schichtsystem (20) umfasst,
wobei das Schichtsystem (20) eine erste Metallschicht (13) und mindestens eine zweite Metallschicht oder Metallnitridschicht (16) enthält, wobei zwischen der ersten Metallschicht (13) und der mindestens einen zweiten Metallschicht oder Metallnitridschicht (16) mindestens eine erste Oxidschicht (21) eingebettet ist,
wobei das zumindest teilweise verspiegelte Bauelement (100) auf seiner nicht-beschichteten Seite einen mittleren Reflexionsgrad im sichtbaren Bereich des Spektrums von mindestens 50% aufweist, wobei das zumindest teilweise verspiegelte Bauelement (100) auf der beschichteten Seite höchstens einen Reflexionsgrad von 8% aufweist, und wobei das zumindest teilweise verspiegelte Bauelement (100) eine mittlere Transmission im sichtbaren Bereich des Spektrums von weniger als 2% aufweist.

2. Zumindest teilweise verspiegeltes Bauelement nach Anspruch 1,
**dadurch gekennzeichnet,**
**dass** die erste Metallschicht (13) im Wesentlichen aus Cr besteht und die zweite Metallschicht (16) im Wesentlichen aus NiCr besteht.

3. Zumindest teilweise verspiegeltes Bauelement nach Anspruch 1 oder 2,
**dadurch gekennzeichnet,**
**dass** die erste Metallschicht (13) einen Reflexionsgrad grösser 50%, bevorzugt grösser 70% und besonders bevorzugt grösser 80% aufweist.

4. Zumindest teilweise verspiegeltes Bauelement nach Anspruch 1,
**dadurch gekennzeichnet,**
**dass** die erste Metallschicht (13) im Wesentlichen aus Ag, Al, NiCrW bestehend aus mindestens 30 Gew.% Wolfram, mindestens 9 Gew.% Ni und einem Gewichtsverhältnis von Ni relativ zu Cr im Bereich von 90/10 bis 50/50 oder NiCr, wobei der Ni- Anteil 40 Gew.% - 80 Gew.% beträgt, besteht und/oder
**dass** die zweite Metallschicht oder Metallnitridschicht (16) im Wesentlichen aus CrN oder aus NiCr mit einem Ni-Anteil von 60 Gew.% bis 90 Gew.% besteht.

5. Zumindest teilweise verspiegeltes Bauelement nach einem der Ansprüche 1 bis 4,
**dadurch gekennzeichnet,**
**dass** die mindestens eine erste eingebettete Oxidschicht (21) aus SiOₓ und/oder aus ZnSnOₓ besteht.

6. Zumindest teilweise verspiegeltes Bauelement nach einem der Ansprüche 1 bis 5,
**dadurch gekennzeichnet,**
**dass** auf die mindestens eine zweite Metallschicht oder Metallnitridschicht (16) mindestens eine zweite Oxidschicht (22) aufgebracht ist.

7. Zumindest teilweise verspiegeltes Bauelement nach Anspruch 6,
**dadurch gekennzeichnet,**
**dass** die mindestens eine zweite Oxidschicht (22) im Wesentlichen aus SiOₓ oder im Wesentlichen aus ZnSnOₓ besteht.

8. Zumindest teilweise verspiegeltes Bauelement nach einem der Ansprüche 1 bis 7,
**dadurch gekennzeichnet,**
**dass** eine äußerste Schicht des Schichtsystems (20) eine Deckschicht (19) ist.

9. Zumindest teilweise verspiegeltes Bauelement nach Anspruch 8,
**dadurch gekennzeichnet,**
**dass** die Deckschicht (19) im Wesentlichen aus Titan-Zirkonium-Oxid (TZO) besteht oder im Wesentlichen aus Ti(Zr)Ox mit einem Zr Anteil von 1 Gew.% bis 99 Gew.% besteht.

10. Zumindest teilweise verspiegeltes Bauelement nach Anspruch 8 oder 9,
**dadurch gekennzeichnet,**
**dass** die Deckschicht (19) einen Brechungsindex von 2,00 bis 2,55, bevorzugt von 2,10 bis 2,45 und besonders bevorzugt von 2,20 bis 2,40 aufweist.

11. Zumindest teilweise verspiegeltes Bauelement nach einem der Ansprüche 1 bis 10,
**dadurch gekennzeichnet,**
**dass** die erste Metallschicht (13) eine Dicke zwischen 30 nm und 60 nm aufweist, bevorzugt zwischen 40 nm und 50 nm und besonders bevorzugt zwischen 44 nm und 46 nm, und dass die mindestens eine zweite Metallschicht oder Metallnitridschicht (16) eine Dicke zwischen 10 nm und 20 nm aufweist, bevorzugt zwischen 13 nm und 15 nm.

12. Zumindest teilweise verspiegeltes Bauelement nach einem der Ansprüche 1 bis 11,
**dadurch gekennzeichnet,**
**dass** die mindestens eine erste Oxidschicht (21) eine erste Teilschicht (14) im Wesentlichen aus SiOₓ mit einer Dicke zwischen 20 nm und 30 nm aufweist, bevorzugt zwischen 24 nm und 26 nm, und eine zweite Teilschicht (15) im Wesentlichen aus ZnSnOₓ mit einer Dicke zwischen 25 nm und 40 nm, bevorzugt zwischen 32 nm und 34 nm, aufweist.

13. Zumindest teilweise verspiegeltes Bauelement nach Anspruch 6 oder 7,
**dadurch gekennzeichnet,**
**dass** die mindestens eine zweite Oxidschicht (22) eine erste Teilschicht (17) im Wesentlichen aus ZnSnOₓ mit einer Dicke zwischen 45 nm und 65 nm aufweist, bevorzugt zwischen 49 nm und 59 nm und besonders bevorzugt zwischen 53 nm und 55 nm, und eine zweite Teilschicht (18) im Wesentlichen aus SiOx aufweist, die eine Dicke zwischen 18 nm und 30 nm, bevorzugt zwischen 22 nm und 24 nm, aufweist.

14. Zumindest teilweise verspiegeltes Bauelement nach Anspruch 12 oder 13,
**dadurch gekennzeichnet,**
**dass** die zweite Teilschicht (15) im Wesentlichen aus ZnSnOₓ oder die erste Teilschicht (17) im Wesentlichen aus ZnSnOₓ einen Brechungsindex von 1,75 bis 2,10, bevorzugt von 1,80 bis 2,05 und besonders bevorzugt von 1,85 bis 2,00 aufweist und dass die erste Oxidschicht im Wesentlichen bestehend aus SiOₓ (12, 14, 18) einen Brechungsindex von 1,44 bis 1,55, bevorzugt von 1,44 bis 1,48 und besonders bevorzugt von 1,45 aufweist.

15. Zumindest teilweise verspiegeltes Bauelement nach Anspruch 6,
**dadurch gekennzeichnet,**
**dass** die mindestens eine zweite Oxidschicht zumindest eine Teilschicht aufweist, die im Wesentlichen aus ZnSnOₓ oder aus ZnO, ZnO:Al mit einem Al Anteil von 0Gew.% - 5Gew.%, SiN_{y} oder Ti(Zr)Oₓ mit einem Zr Anteil von 1 - 99Gew.% besteht und/oder
**dass** die mindestens eine erste Oxidschicht zumindest eine erste Teilschicht aufweist, die im Wesentlichen aus SiOx oder aus SiOₓ:A1 mit einem Al Anteil von 0,02Gew.% - 10Gew.% besteht.

16. Zumindest teilweise verspiegeltes Bauelement nach Anspruch 15,
**dadurch gekennzeichnet,**
**dass** die mindestens eine Teilschicht der mindestens einen zweiten Oxidschicht einen Brechungsindex von 1,75 bis 2,10, bevorzugt von 1,80 bis 2,05 und besonders bevorzugt von 1,85 bis 2,00 aufweist und/oder dass die zumindest eine erste Teilschicht der mindestens einen ersten Oxidschicht einen Brechungsindex von 1,44 bis 1,55, bevorzugt von 1,44 bis 1,48 und besonders bevorzugt von 1,45 aufweist.

17. Zumindest teilweise verspiegeltes Bauelement nach einem der Ansprüche 8 bis 10,
**dadurch gekennzeichnet,**
**dass** die Deckschicht (19) eine Dicke zwischen 1 nm und 5 nm aufweist, bevorzugt zwischen 2 nm und 3 nm.

18. Zumindest teilweise verspiegeltes Bauelement nach einem der Ansprüche 1 bis 17,
**dadurch gekennzeichnet,**
**dass** das transparente Substrat (11) aus Glas, insbesondere aus Flachglas mit hoher Lichttransmission, insbesondere aus Kalk-Natron-Silikat-Glas, oder einem transparenten Kunststoff, insbesondere aus Polycarbonat (PC) oder insbesondere aus Polymethylmethacrylat (PMMA), besteht.

## Claims

1. An at least partially mirrored component (100), wherein the at least partially mirrored component (100) comprises a transparent substrate (11) and a layer system (20) applied thereon,
wherein the layer system (20) comprises a first metal layer (13) and at least one second metal layer or metal nitride layer (16), there being at least one first oxide layer (21) embedded between the first metal layer (13) and the at least one second metal layer or metal nitride layer (16),
wherein the at least partially mirrored component (100) on its uncoated side has a mean reflectance in the visible range of the spectrum of at least 50%, the at least partially mirrored component (100) on the coated side having at most a reflectance of 8%, and
wherein the at least partially mirrored component (100) has a mean transmission in the visible range of the spectrum of less than 2%.

2. At least partially mirrored component according to Claim 1,
**characterized**
**in that** the first metal layer (13) consists substantially of Cr and the second metal layer (16) consists substantially of NiCr.

3. At least partially mirrored component according to Claim 1 or 2,
**characterized**
**in that** the first metal layer (13) has a reflectance of greater than 50%, preferably greater than 70% and particularly preferably greater than 80%.

4. At least partially mirrored component according to Claim 1,
**characterized**
**in that** the first metal layer (13) consists substantially of Ag, Al, NiCrW consisting of at least 30 wt% tungsten, at least 9 wt% Ni and a weight ratio of Ni relative to Cr in the range from 90/10 to 50/50, or NiCr, the Ni fraction being 40 wt% - 80 wt%,
and/or
**in that** the second metal layer or metal nitride layer (16) consists substantially of CrN or of NiCr with an Ni fraction of 60 wt% to 90 wt%.

5. At least partially mirrored component according to any of Claims 1 to 4,
**characterized**
**in that** the at least one first embedded oxide layer (21) consists of SiOₓ and/or of ZnSnOₓ.

6. At least partially mirrored component according to any of Claims 1 to 5,
**characterized**
**in that** the at least one second metal layer or metal nitride layer (16) bears at least one applied second oxide layer (22).

7. At least partially mirrored component according to Claim 6,
**characterized**
**in that** the at least one second oxide layer (22) consists substantially of SiOₓ or substantially of ZnSnOₓ.

8. At least partially mirrored component according to any of Claims 1 to 7,
**characterized**
**in that** an outermost layer of the layer system (20) is a cover layer (19).

9. At least partially mirrored component according to Claim 8,
**characterized**
**in that** the cover layer (19) consists substantially of titanium zirconium oxide (TZO) or consists substantially of Ti(Zr)Ox with a Zr fraction of 1 wt% to 99 wt%.

10. At least partially mirrored component according to Claim 8 or 9,
**characterized**
**in that** the cover layer (19) has a refractive index of 2.00 to 2.55, preferably of 2.10 to 2.45 and particularly preferably of 2.20 to 2.40.

11. At least partially mirrored component according to any of Claims 1 to 10,
**characterized**
**in that** the first metal layer (13) has a thickness of between 30 nm and 60 nm, preferably between 40 nm and 50 nm and particularly preferably between 44 nm and 46 nm, and in that the at least one second metal layer or metal nitride layer (16) has a thickness of between 10 nm and 20 nm, preferably between 13 nm and 15 nm.

12. At least partially mirrored component according to any of Claims 1 to 11,
**characterized**
**in that** the at least one first oxide layer (21) has a first partial layer (14) substantially composed of SiOₓ with a thickness of between 20 nm and 30 nm, preferably between 24 nm and 26 nm, and a second partial layer (15) substantially composed of ZnSnOₓ with a thickness of between 25 nm and 40 nm, preferably between 32 nm and 34 nm.

13. At least partially mirrored component according to Claim 6 or 7,
**characterized**
**in that** the at least one second oxide layer (22) has a first partial layer (17) substantially composed of ZnSnOₓ with a thickness of between 45 nm and 65 nm, preferably between 49 nm and 59 nm, and particularly preferably between 53 nm and 55 nm, and a second partial layer (18) substantially composed of SiOₓ which has a thickness of between 18 nm and 30 nm, preferably between 22 nm and 24 nm.

14. At least partially mirrored component according to Claim 12 or 13,
**characterized**
**in that** the second partial layer (15) substantially composed of ZnSnOₓ or the first partial layer (17) substantially composed of ZnSnOₓ has a refractive index of 1.75 to 2.10, preferably of 1.80 to 2.05 and particularly preferably of 1.85 to 2.00 and in that the first oxide layer substantially consisting of SiOₓ (12, 14, 18) has a refractive index of 1.44 to 1.55, preferably of 1.44 to 1.48 and particularly preferably of 1.45.

15. At least partially mirrored component according to Claim 6,
**characterized**
**in that** the at least one second oxide layer has at least one partial layer which consists substantially of ZnSnOₓ or of ZnO, ZnO:Al with an Al fraction of 0 wt% - 5 wt%, SiN_{y} or Ti(Zr)Oₓ with a Zr fraction of 1 - 99 wt%
and/or
**in that** the at least one first oxide layer has at least one first partial layer which consists substantially of SiOₓ or of SiOₓ:A1 with an Al fraction of 0.02 wt% - 10 wt%.

16. At least partially mirrored component according to Claim 15,
**characterized**
**in that** the at least one partial layer of the at least one second oxide layer has a refractive index of 1.75 to 2.10, preferably of 1.80 to 2.05 and particularly preferably of 1.85 to 2.00
and/or in that the at least one first partial layer of the at least one first oxide layer has a refractive index of 1.44 to 1.55, preferably of 1.44 to 1.48 and particularly preferably of 1.45.

17. At least partially mirrored component according to any of Claims 8 to 10,
**characterized**
**in that** the cover layer (19) has a thickness of between 1 nm and 5 nm, preferably between 2 nm and 3 nm.

18. At least partially mirrored component according to any of Claims 1 to 17,
**characterized**
**in that** the transparent substrate (11) consists of glass, more particularly of flat glass with high light transmission, more particularly of soda lime silicate glass, or of a transparent plastic, more particularly of polycarbonate (PC) or more particularly of polymethyl methacrylate (PMMA).

## Revendications

1. Elément de construction au moins partiellement réfléchissant (100), l'élément de construction au moins partiellement réfléchissant (100) comprenant un substrat transparent (11) et un système de couches (20) appliqué sur son dessus,
le système de couches (20) contenant une première couche de métal (13) et au moins une seconde couche de métal ou couche de nitrure de métal (16), au moins une première couche d'oxyde (21) étant insérée entre la première couche de métal (13) et la au moins une seconde couche de métal ou couche de nitrure de métal (16),
l'élément de construction au moins partiellement réfléchissant (100) présentant sur son côté non revêtu un degré de réflexion moyen dans le domaine du visible du spectre d'au moins 50 %, l'élément de construction au moins partiellement réfléchissant (100) présentant sur le côté revêtu au plus un degré de réflexion de 8 %, et l'élément de construction au moins partiellement réfléchissant (100) présentant une transmission moyenne dans le domaine du visible du spectre inférieure à 2 %.

2. Elément de construction au moins partiellement réfléchissant selon la revendication 1, **caractérisé en ce que** la première couche de métal (13) est essentiellement constituée de Cr et la seconde couche de métal (16) est essentiellement constituée de NiCr.

3. Elément de construction au moins partiellement réfléchissant selon la revendication 1 ou 2, **caractérisé en ce que** la première couche de métal (13) présente un degré de réflexion supérieur à 50 %, de préférence supérieur à 70 % et encore mieux supérieur à 80 %.

4. Elément de construction au moins partiellement réfléchissant selon la revendication 1, **caractérisé en ce que** la première couche de métal (13) est essentiellement constituée de Ag, Al, NiCrW constitué d'au moins 30 % en masse de tungstène, au moins 9 % en masse de Ni et d'un rapport en masse de Ni par rapport à Cr dans le domaine de 90/10 à 50/50 ou NiCr, la part en Ni étant de 40 % en masse - 80 % en masse, et/ou
**en ce que** la seconde couche de métal ou couche de nitrure de métal (16) est essentiellement constituée de CrN ou de NiCr avec une part en Ni de 60 % en masse à 90 % en masse.

5. Elément de construction au moins partiellement réfléchissant selon l'une quelconque des revendications 1 à 4, **caractérisé en ce que** la au moins une première couche d'oxyde insérée (21) est constituée de SiOₓ et/ou de ZnSnOₓ.

6. Elément de construction au moins partiellement réfléchissant selon l'une quelconque des revendications 1 à 5, **caractérisé en ce qu'**au moins une seconde couche d'oxyde (22) est appliquée sur la au moins une seconde couche de métal ou couche de nitrure de métal (16).

7. Elément de construction au moins partiellement réfléchissant selon la revendication 6, **caractérisé en ce que** la au moins une seconde couche d'oxyde (22) est essentiellement constituée de SiOₓ ou essentiellement de ZnSnOₓ.

8. Elément de construction au moins partiellement réfléchissant selon l'une quelconque des revendications 1 à 7, **caractérisé en ce qu'**une couche extérieure du système de couches (20) est une couche de couverture (19).

9. Elément de construction au moins partiellement réfléchissant selon la revendication 8, **caractérisé en ce que** la couche de couverture (19) est essentiellement constituée d'oxyde de titane-zirconium (TZO) ou est essentiellement constituée de Ti(Zr)Oₓ avec une part en Zr de 1 % en masse à 99 % en masse.

10. Elément de construction au moins partiellement réfléchissant selon la revendication 8 ou 9, **caractérisé en ce que** la couche de couverture (19) présente un indice de réfraction de 2,00 à 2,55, de préférence de 2,10 à 2,45 et encore mieux de 2,20 à 2,40.

11. Elément de construction au moins partiellement réfléchissant selon l'une quelconque des revendications 1 à 10, **caractérisé en ce que** la première couche de métal (13) présente une épaisseur de 30 nm à 60 nm, de préférence de 40 nm à 50 nm et encore mieux de 44 nm à 46 nm, et **en ce que** la au moins une seconde couche de métal ou couche de nitrure de métal (16) présente une épaisseur de 10 nm à 20 nm, de préférence de 13 nm à 15 nm.

12. Elément de construction au moins partiellement réfléchissant selon l'une quelconque des revendications 1 à 11, **caractérisé en ce que** la au moins une première couche d'oxyde (21) présente une première couche partielle (14) essentiellement de SiOₓ avec une épaisseur de 20 nm à 30 nm, de préférence de 24 nm à 26 nm, et une seconde couche partielle (15) essentiellement de ZnSnOₓ avec une épaisseur de 25 nm à 40 nm, de préférence de 32 nm à 34 nm.

13. Elément de construction au moins partiellement réfléchissant selon la revendication 6 ou 7, **caractérisé en ce que** la au moins une seconde couche d'oxyde (22) présente une première couche partielle (17) essentiellement de ZnSnOₓ avec une épaisseur de 45 nm à 65 nm, de préférence de 49 nm à 59 nm et encore mieux de 53 nm à 55 nm, et présente une seconde couche partielle (18) essentiellement de SiOx, qui présente une épaisseur de 18 nm à 30 nm, de préférence de 22 nm à 24 nm.

14. Elément de construction au moins partiellement réfléchissant selon la revendication 12 ou 13, **caractérisé en ce que** la seconde couche partielle (15) essentiellement de ZnSnOₓ ou la première couche partielle (17) essentiellement de ZnSnOₓ présente un indice de réfraction de 1,75 à 2,10, de préférence de 1,80 à 2,05 et encore mieux de 1,85 à 2,00 et **en ce que** la première couche d'oxyde essentiellement constituée de SiOₓ (12, 14, 18) présente un indice de réfraction de 1,44 à 1,55, de préférence de 1,44 à 1,48 et encore mieux de 1,45.

15. Elément de construction au moins partiellement réfléchissant selon la revendication 6, **caractérisé en ce que** la au moins une seconde couche d'oxyde présente au moins une couche partielle, qui est essentiellement constituée de ZnSnOₓ ou de ZnO, ZnO:Al avec une part d'AI de 0 % en masse - 5 % en masse, SiN_{y} ou Ti(Zr)Oₓ avec une part de Zr de 1 - 99 % en masse et/ou **en ce que** la au moins une première couche d'oxyde présente au moins une première couche partielle, qui est essentiellement constituée de SiOₓ ou de SiOₓ:Al avec une part d'AI de 0,02 % en masse - 10 % en masse.

16. Elément de construction au moins partiellement réfléchissant selon la revendication 15, **caractérisé en ce que** la au moins une couche partielle de la au moins une seconde couche d'oxyde présente un indice de réfraction de 1,75 à 2,10, de préférence de 1,80 à 2,05 et de préférence de 1,85 à 2,00 et/ou **en ce que** la au moins une première couche partielle de la au moins une première couche d'oxyde présente un indice de réfraction de 1,44 à 1,55, de préférence de 1,44 à 1,48 et encore mieux de 1,45.

17. Elément de construction au moins partiellement réfléchissant selon l'une quelconque des revendications 8 à 10, **caractérisé en ce que** la couche de couverture (19) présente une épaisseur de 1 nm à 5 nm, de préférence de 2 nm à 3 nm.

18. Elément de construction au moins partiellement réfléchissant selon l'une quelconque des revendications 1 à 17, **caractérisé en ce que** le substrat transparent (11) est constitué de verre, en particulier de verre plat avec une transmission de lumière élevée, en particulier de verre de calcium-soude-silicate, ou d'une matière synthétique transparente, en particulier de polycarbonate (PC) ou en particulier de poly(méthacrylate de méthyle) (PMMA).
